# EUROPEAN PATENT APPLICATION

(11) **EP 3 001 662 A2**
(43) Date of publication of application: **30.03.2016**
(21) Application number: 15182074.3
(22) Date of filing: 21.08.2015
(51) Int. Cl.: H04M 3/56

(54) **CONFERENCE PROCEED APPARATUS AND METHOD FOR ADVANCING CONFERENCE**

(30) Priority: 24.09.2014 KR 20140127794
(71) Applicant: Samsung Electronics Co., Ltd., Gyeonggi-do 16677 (KR)
(72) Inventor: KIM, Seung-min, Gyeonggi-do (KR); NA, Jeong-shan, Gyeonggi-do (KR); LEE, Dai-boong, Gyeonggi-do (KR); LEE, Min-hyuk, Seoul (KR)
(74) Representative: Taor, Simon Edward William

(57) **Abstract**

A conference proceeding apparatus a conference proceeding method for advancing a conference are provided. The conference proceeding apparatus includes an interface configured to receive an input, a display configured to display subjects of a conference in response to the interface receiving an input to start the conference, and a voice recognizer configured to recognize voices of participants of the conference. The conference proceeding apparatus further includes a voice-text converter configured to convert the recognized voices into texts, and a controller configured to register, in a record of the conference, the converted texts corresponding to the subjects.

## Description

Apparatuses and methods consistent with exemplary embodiments relate to a conference proceeding apparatus a conference proceeding method for advancing a conference.

Conference rooms are often insufficient compared to a number of company staff. Generally, a conference manager receives a request for reserving a conference room offline, and allocates a conference room to the requester at a time slot that the conference room is not reserved. However, it may be difficult to efficiently allocate a conference room for increasing requests such as in a company having a large number of workers.

Further, the general way of conducting the conference is that one of the conference participants has to administer the conference. In this case, the conference administrator may have difficulty in actively participating in the conference, and at least one of the other conference participants may also have the inconvenience of recording the conference discussions and writing the conference record.

Therefore, a new technology is required, which allows efficient reservation of the conference rooms, and convenient administration of the conference.

Exemplary embodiments address at least the above disadvantages and other disadvantages not described above. Also, the exemplary embodiments are not required to overcome the disadvantages described above, and may not overcome any of the problems described above.

Exemplary embodiments provide a conference proceeding apparatus configured to allow efficient reservation of a conference room and convenient advancing of a conference, and a conference proceeding method thereof.

According to an aspect of an exemplary embodiment, there is provided a conference proceeding apparatus including an interface configured to receive an input, a display configured to display subjects of a conference in response to the interface receiving an input to start the conference, and a voice recognizer configured to recognize voices of participants of the conference. The conference proceeding apparatus further includes a voice-text converter configured to convert the recognized voices into texts, and a controller configured to register, in a record of the conference, the converted texts corresponding to the subjects.

The conference proceeding apparatus may further include a speaker, and the controller may be further configured to control the speaker to output an audio indicating the subjects of the conference in response to the user interface receiving the input to start the conference.

The interface may be further configured to receive input texts, and the controller may be further configured to register, in the record of the conference, the input texts corresponding to the subjects of the conference.

The conference proceeding apparatus may further include a keyword searcher configured to extract keywords from the converted texts, and search with the extracted keywords for items related to the conference.

The controller may be further configured to register, in the record of the conference, results of the searching corresponding to the subjects of the conference.

The keyword searcher may be configured to perform the searching based on at least one among big data processing, triz, and a mind map.

The conference proceeding apparatus may further include a face recognizer configured to recognize faces of the participants of the conference, and the controller may be further configured to register, in the record of the conference, the recognized faces.

The controller may be configured to register, in the record of the conference, the converted texts by matching the recognized faces of the participants of the conference with the recognized voices of the participants.

The conference proceeding apparatus may further include a gesture recognizer configured to recognize gestures of the participants of the conference, and the controller may be further configured to determine whether a subject of the conference is voted for based on the recognized gestures.

The controller may be further configured to control the display to display results of voting for the subject of the conference by the participants of the conference.

The controller may be further configured to track a duration of at least one of the subjects of the conference, and display the tracked duration.

In response to the interface receiving an input to reserve a conference room, the controller may be further configured to control the display to display information of a conference room at a time slot without a conference reservation.

In response to the interface receiving an input to reserve a conference room, the controller may be further configured to control the display to display information of a conference room at a time slot without a conference reservation based on at least one among office position information and schedule information of the participants of the conference.

The conference proceeding apparatus may further include a communicator configured to communicate with terminal apparatuses of the participants of the conference, and the controller may be further configured to control the communicator to transmit, to the terminal apparatuses, at least one among a purpose of the conference, a time of the conference, and a position information of the conference in response to a reservation of the conference being complete.

According to an aspect of an exemplary embodiment, there is provided a conference proceeding method including receiving an input, displaying subjects of a conference in response to receiving an input to start the conference, and recognizing voices of participants of the conference. The conference proceeding method further includes converting the recognized voices into texts, and registering, in a record of the conference, the converted texts corresponding to the subjects.

The conference proceeding method may further include outputting an audio indicating the subjects of the conference in response to the receiving the input to start the conference.

The conference proceeding method may further include receiving input texts, and registering, in the record of the conference, the input texts corresponding to the subjects of the conference.

The conference proceeding method may further include extracting keywords from the converted texts, and searching with the extracted keywords for items related to the conference.

The conference proceeding method may further include registering, in the record of the conference, results of the searching corresponding to the subjects of the conference.

The conference proceeding method may further include recognizing faces of the participants of the conference, and registering, in the record of the conference, the recognized faces.

According to an aspect of an exemplary embodiment, there is provided a conference proceeding apparatus including, an interface, a display, and a controller configured to control the display to display information of an unreserved conference room based on at least one among office position information and schedule information of participants of a conference, in response to the interface receiving an input to reserve a conference room.

The controller may be further configured to determine an unscheduled time slot of the participants of the conference based on the schedule information of the participants, the schedule information including scheduled and unscheduled time slots of the participants. The controller may be further configured to determine the unreserved conference room at the determined unscheduled time slot based on time sheet information of the conference rooms, the time sheet information including reserved and unreserved time slots of the conference rooms.

The office position information of the participants of the conference may include physical locations of offices of the participants, the controller may be further configured to determine conference rooms within a distance from the physical locations of the offices, and the controller may be further configured to determine, among the conference rooms, the unreserved conference room that is closest in distance to the physical locations of the offices.

The controller may be further configured reserve the displayed unreserved conference room in response the interface receiving an input to select the displayed unreserved conference room.

The above and/or other aspects will be more apparent by describing in detail exemplary embodiments with reference to the accompanying drawings, in which:
FIG. 1 is a block diagram of a conference proceeding apparatus according to an exemplary embodiment;
FIG. 2 is a diagram illustrating a conference reservation service according to an exemplary embodiment;
FIG. 3 is a diagram illustrating a conference reservation service according to an exemplary embodiment;
FIG. 4 is a diagram illustrating a conference reservation service according to an exemplary embodiment;
FIG. 5 is a diagram of a conference proceeding system according to an exemplary embodiment;
FIG. 6 is a block diagram of a conference proceeding apparatus according to an exemplary embodiment;
FIG. 7 is a diagram illustrating a display method including conference proceeding steps according to an exemplary embodiment;
FIG. 8 is a diagram illustrating a display method including conference proceeding steps according to an exemplary embodiment;
FIGS. 9 to 13 are diagrams illustrating display methods including conference proceeding steps according to exemplary embodiments; and
FIG. 14 is a flowchart illustrating a conference proceeding method according to an exemplary embodiment.

Exemplary embodiments are described in more detail with reference to the accompanying drawings.

In the following description, like reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions are not described in detail because they would obscure the description with unnecessary detail.

It will be understood that the terms such as "unit", "-er (-or)", and "module" described in the specification refer to an element configured to perform at least one function or operation, and may be implemented in hardware or a combination of hardware and software.

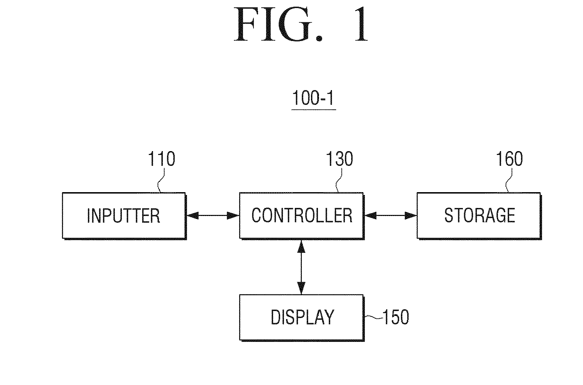

FIG. 1 is a block diagram of a conference proceeding apparatus 100-1 according to an exemplary embodiment.

The conference proceeding apparatus 100-1 may be implemented to be various electronic devices. For example, the conference proceeding apparatus 100-1 may be implemented to be at least one among a digital television, a tablet personal computer (PC), a portable multimedia player (PMP), a personal digital assistant (PDA), a smart phone, a mobile phone, a digital frame, a digital signage, and a kiosk. In another example, the conference proceeding apparatus 100-1 may be implemented to be a server computer. In another example, the conference proceeding apparatus 100-1 may be implemented to be a conference proceeding system including two or more electronic devices, which will be described below. In this example, one electronic device may provide a user interface, and another electronic device may handle processing information to provide a conference proceeding service.

Referring to FIG. 1, the conference proceeding apparatus 100-1 includes an inputter 110 or interface, a controller 130, a display 150, and a storage 160.

The inputter 110 is configured to receive a user input. The inputter 110 may be a communication interface configured to receive a control signal through, for example, a remote controller, a mic, a keyboard, a mouse, and a microphone. Regarding hand gestures, the inputter 110 may be a photographer (e.g., a camera or other imaging device) provided on the conference proceeding apparatus 100-1 to photograph an image and capture a video. A user may input a user command to search for a conference room, or input a request to reserve a conference room, through the inputter 110.

The controller 130 controls an overall operation of the conference proceeding apparatus 100-₁. The controller 130 controls the inputter 110 to receive various inputs. Further, the controller 130 reads stored information from the storage 160 (e.g., conference room reservation information), and provides the information to a user.

In detail, the controller 130 controls the display 150 to display a user interface for reserving a conference room. A user inputs a request to reserve a conference room through the inputter 110. In response to receiving the user input to reserve a conference room, the controller 130 reads the conference room reservation information from the storage 160, and controls the display 150 to display information of times conference rooms are not reserved.

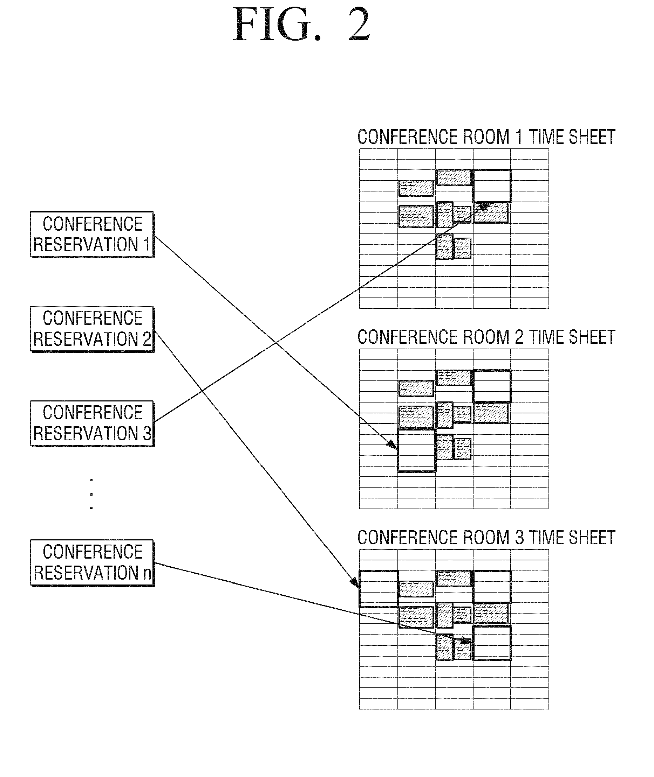

FIG. 2 is a diagram illustrating a conference reservation service according to an exemplary embodiment.

Referring to FIGS. 1 and 2, the controller 130 may manage reservation time sheets respectively regarding conference rooms (conference room 1, 2, 3, ..., and n time sheets). The reservation time sheets may be stored in the storage 160. The controller 130 may reserve the conference rooms based on the reservation time sheets of the conference rooms and conference reservation requests (conference reservations 1, 2, 3, ..., and n).

When a user input to reserve a conference room is received, the controller 130 reads the conference room reservation information from the storage 160, namely, the information of the times the conference rooms are not reserved. The controller 130 controls the display 150 to display the time the conference rooms are not reserved. A user selects one of the conference rooms and a time at which the selected one of the conference rooms is not reserved through the inputter 110. The controller 130 reserves the conference room based on the user input, and updates and stores the conference room reservation information in the storage 160.

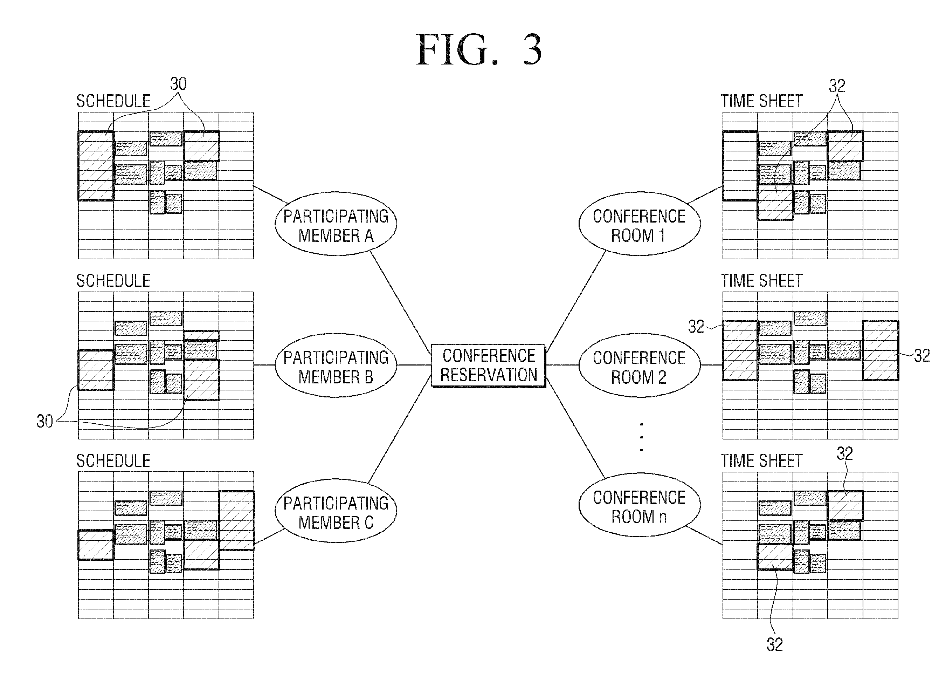

FIG. 3 is a diagram illustrating a conference reservation service according to an exemplary embodiment.

Referring to FIGS. 1 and 3, when a user input to reserve a conference room is received, the controller 130 controls the display 150 to display the conference room information at a time slot having no conference reservation or no work given in schedule information of conference participants. For example, a user may previously input the schedule information through the inputter 110. In another example, the controller 130 may obtain the schedule information from another device. The schedule information of the conference participants may be stored in the storage 160 or another server. In this example, the controller 130 may read the stored schedule information of the conference participants from the storage 160 or the other server, and determine the time slot 30 having no conference reservation or no work given in the read schedule information of the conference participants. Further, the controller 130 determines whether there is a conference room having no reservation at a time slot having no conference reservation or no work given commonly for the conference participants.

In detail, when a conference reservation is requested, the controller 130 determines a time slot 30 having no conference reservation or no work given for each of the conference participants A, B, and C in the schedules of the conference participants. Further, the controller 130 determines a time slot 32 having no reservation in each of the reservation time sheets of the conference rooms 1, 2, ... , and n. Further, the controller 130 determines conference rooms having no reservation at the time slot having no conference reservation or no work given commonly for the conference participants A, B, and C, and controls the display 150 to display the determined conference rooms and the time slot. A user completes the conference reservation by selecting the time slot and a conference room in which the conference reservation can be made from, e.g., the determined conference rooms. The controller 130 reserves the selected conference room, and updates and stores the conference room reservation information in the storage 160.

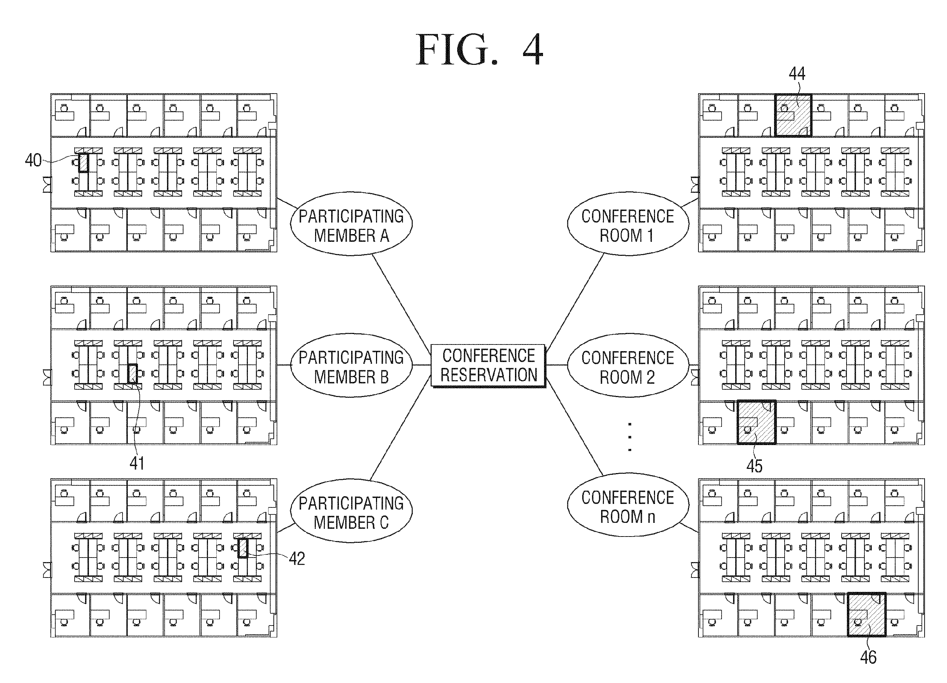

FIG. 4 is a diagram illustrating a conference reservation service according to an exemplary embodiment.

Referring to FIGS. 1 and 4, when a user input to reserve a conference room is received, the controller 130 controls the display 150 to display the conference room information at a time slot having no conference reservation, based on office position information of conference participants (or office desk position information of conference participants). For example, a user may previously input the office position information through the inputter 110. In another example, the controller 130 may obtain the office position information from another device. The office position information of the conference participants may be stored in the storage 160 or another server. In this example, the controller 130 may read the stored office position information of the conference participants from the storage 160 or the other server, and determine conference rooms positioned within a preset distance from the read office position information. In addition to the distance, other conditions such as, for example, a floor or a building in which conference rooms are located, may be considered. The above conditions may enhance the convenience of the participants attending a conference.

In detail, when a conference reservation is requested, the controller 130 determines office desk positions 40, 41, and 42 of the conference participants, A, B, and C, respectively. Further, the controller 130 determines the conditions of the respective conference rooms 1, 2, ... , and n, and determines conference rooms 44, 45, and 46 satisfying the respective conditions. The controller 130 controls the display 150 to display the determined conference rooms 44, 45, and 56. The controller 130 may recommend a conference room having the highest convenience (e.g., closest in distance to the office desk positions) among the determined conference rooms 44, 45, and 46. A user may complete the conference reservation by selecting a conference room in which the conference reservation can be made from the determined conference rooms 44, 45, and 46. The controller 130 reserves the selected conference room, updates and stores the conference room reservation information in the storage 160.

The above conference room reservation may be performed in real time. In this example, current position information of the conference participants may be considered instead of the office position information of the conference participants. Thus, when a user input to reserve a conference room is received, the controller 130 may control the display 150 to display the conference room information at a time slot having no conference reservation, based on the current position information of the conference participants. The current position information of the conference participants may be received from terminal apparatuses of the conference participants in real time.

Further, the conference room reservation may be performed based on both the schedule information and the office position information (or the current position information) of the conference participants. Thus, when a user input to reserve a conference is received, the controller 130 may control the display to display the conference room information at a time slot having no conference reservation, based on the office position information and the schedule information of the conference participants. The controller 130 may reserve a conference room based on a user input, and update and store the conference room reservation information in the storage 160.

Referring again to FIG. 1, the display 150 is configured to display various data. The display 150 displays the user interface for the conference reservation, as described above. Thus, the display 150 may display the information regarding conference rooms, where the conference reservation can be made, and an image indicating that the conference reservation is complete.

The display 150 may display video based on signal-processed video signals. The display 150 may include a scaler, a frame rate converter (not illustrated), a video enhancer, and a display module. The scaler may adjust an aspect ratio of the video. The video enhancer may remove degradation or noise that may occur in the video. Processed video data may be stored in a frame buffer. The frame rate converter may adjust a frame rate, and the video data in the frame buffer may be delivered to the display module according to the adjusted frame rate.

The display module may be a circuit configured to output video on a display panel. The display module may include a timing controller, a gate driver, a data driver, and a voltage driver (not illustrated).

The timing controller may generate a gate control signal (a scan control signal) and a data control signal (a data signal), rearrange input R, G, B data, and provide a result to the data driver. The gate driver may apply a gate on/off voltage (Vgh/Vgl) provided from the voltage driver to the display panel based on the gate control signal generated by the timing controller. The data driver may complete scaling based on the data control signal generated by the timing controller, and input R, G, B data of a video frame to the display panel. The voltage driver may generate and deliver a driving voltage respectively to the gate driver, the data driver, and the display panel.

The display panel may be implemented with various devices. For example, the display panel may be implemented based on various display technologies such as Organic Light Emitting Diodes (OLED), Liquid Crystal Display (LCD) panel, Plasma Display Panel (PDP), Vacuum Fluorescent Display (VFD), Field Emission Display (FED), and Electro Luminescence Display (ELD). The display panel may be implemented as an emitting type; however, reflecting displays such as, for example, electrophoretic ink (e-ink), photonic ink (p-ink), and photonic crystal may be also considered. Further, the display panel may be implemented to be a flexible display and a transparent display.

The storage 160 is configured to store information. The storage 160 stores at least one among the office position information of the conference participants, the schedule information of the conference participants, the conference room reservation time sheet information, and the conference room position information.

The storage 160 may be implemented with various devices. For example, the storage 160 may include a memory such as ROM or RAM, a hard disk drive (HDD), and a blu-ray disk (BD). The memory may be electrically erasable and programmable ROM (EEROM) or non-volatile memory such as non-volatile RAM. However, using volatile memory such as static RAM or dynamic RAM may not be excluded. Regarding the HDD, a small size of the HDD less than 1.8 inch that can be mounted on the conference proceeding apparatus 100-1 may be used.

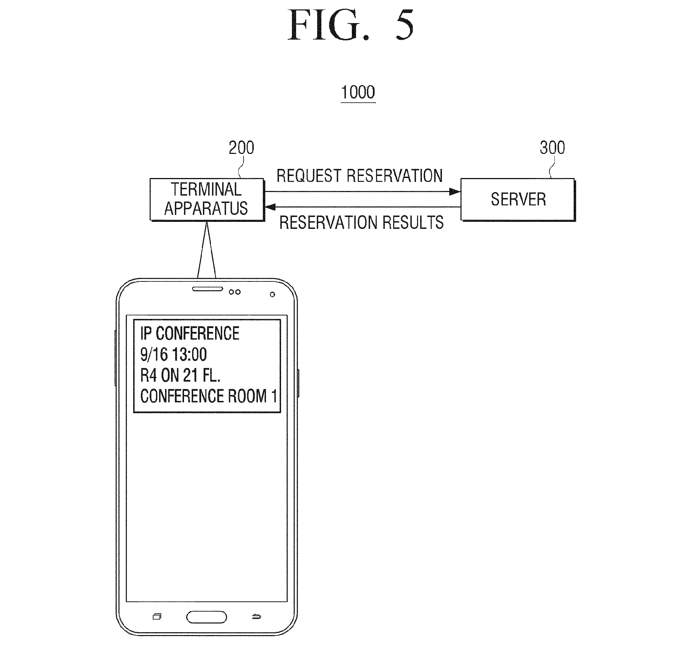

FIG. 5 is a block diagram of a conference proceeding system 1000 according to an exemplary embodiment.

An electronic apparatus may be implemented to be a conference proceeding system 1000 including two or more electronic devices. Referring to FIG. 5, the conference proceeding system 1000 includes a terminal apparatus 200 and a server 300.

The terminal apparatus 200 provides functions of the display 150 and the inputter 110 of FIG. 1. Thus, the terminal apparatus 200 provides a user interface, and receives a user input. Further, the terminal apparatus 200 provides the user input (requests a conference room reservation) through a communication interface to the server 300.

The server 300 provides functions of the controller 130 of FIG. 1. The server 300 performs the conference room reservation by managing and processing information to provide a conference proceeding service. The server 300 may be implemented to be the conference proceeding apparatus 100-1 of FIG. 1.

The server 300 or the conference proceeding apparatus 100-1 may additionally include a communicator configured to perform communication with the terminal apparatus 200 of a conference participant. The server 300 or the controller 130 may control the communicator to transmit at least one among a conference purpose, a conference time, and conference position information (conference reservation results), to the terminal apparatus 200 of the conference participant when the conference room reservation is completed.

FIG. 5 illustrates that the server 300 transmits a text message regarding the conference purpose, the conference time, and the conference position information, to the terminal apparatus 200 of the conference participant when the conference room reservation is completed.

Further, the server 300 or the controller 130 may control the communicator to transmit the conference reservation results to the terminal apparatus 200 as a reminder message. That is, the conference reservation results may be transmitted to the terminal apparatus 200 of the conference participant before a preset time from the reserved conference time.

Referring again to FIG. 1, the controller 130 may include a hardware configuration of a CPU or a cache memory, an operating system, and a software configuration of applications for performing specific purposes. The memory may read controlling commands regarding each of the components for the operation of the conference proceeding apparatus 100-1 based on a system clock, and each of the components in the hardware confirmation may be operated by generating electrical signals based on the read controlling commands.

The following will explain a conference proceeding apparatus 100-2 according to an exemplary embodiment. For the purpose of brevity, components overlapping with those explained above will not be further described below except for the following additional explanation.

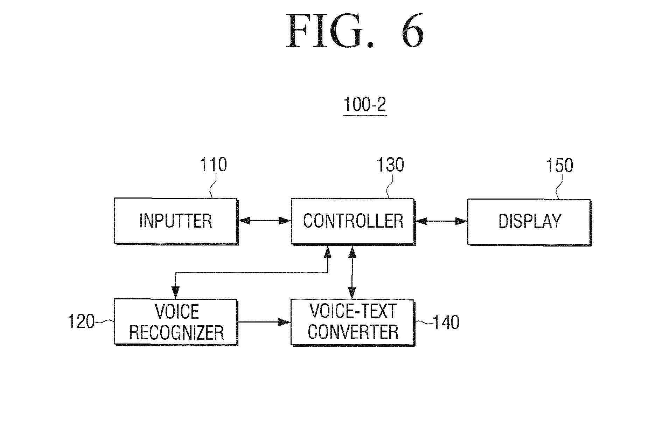

FIG. 6 is a block diagram of the conference proceeding apparatus 100-2 according to an exemplary embodiment.

Referring to FIG. 6, the conference proceeding apparatus 100-2 includes the inputter 110, a voice recognizer 120, the controller 130, a voice-text converter 140, and the display 150.

The controller 130 displays conference proceeding steps on a screen when a user input to start a conference is received. The conference proceeding steps may be previously-inputted based on the user input. For example, when the conference proceeding steps include subjects A, B, and C, which are inputted to be proceeded in sequence, the controller 130 may control the display 150 to display the subject A as a start. When a discussion regarding subject A is finished, the controller 130 may control that the display 150 to display the subject B. Whether the subject A discussion is finished may be determined based on a user input. Otherwise, the subject A may automatically turn to the next subject when a preset time elapses. In another example, the conference proceeding steps include an introduction, a main discussion, and a conclusion, and introduction items, main discussion items, and conclusion items may be consecutively displayed likewise.

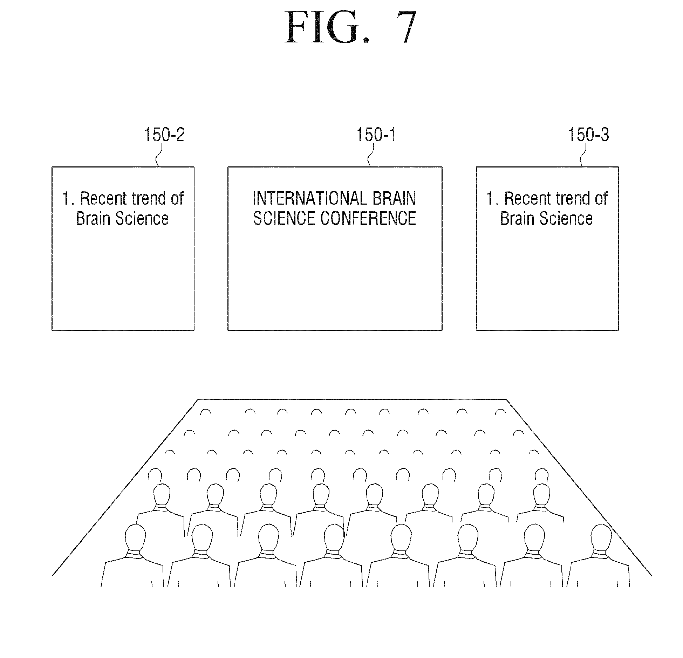

FIG. 7 is a diagram illustrating a display method including conference proceeding steps according to an exemplary embodiment.

In a large-scale international conference, a plurality of display screens may be used. For example, referring to FIG. 7, a display includes a plurality of display panels 150-1, 150-2, 50-3. Referring to FIGS. 6 and 7, the controller 130 controls a part of the display panels 150-1, 50-2, 50-3 to display the conference proceeding steps. For example, the controller 130 controls the middle display panel 150-1 to display a conference main title, and controls the side display panels 150-2 and 150-3 to display the conference proceeding steps. The conference proceeding steps and other information may be displayed with various methods according to a conference purpose.

Referring again to FIG. 6, the conference proceeding apparatus 100-2 may additionally include a speaker. In this example, when a user input to start a conference is received, the controller 130 may control the speaker to output an audio indicating the conference proceeding steps. The conference proceeding apparatus 100-2 may guide each conference proceeding step with a voice. In this example, the controller 130 may convert texts indicating the conference proceeding steps into voice by using a Text-To-Speech (TTS) module, and output the converted voice.

The TTS module may compose the delivered texts into the voice with languages that can be communicated with an audience based on preset basic voice feature information. In detail, the TTS module may receive the basic voice feature information established based on final speaking voice feature information, and compose the voice based on the received basic voice feature information.

The TTS module may first process the texts in view of a language research field. Thus, a text sentence may be converted based on dictionaries on numbers, abbreviations, and symbols regarding the input texts, and a sentence structure such as positions of a subject and a predicate within the sentence may be analyzed by referring to dictionaries on speech parts. Further, the input sentence may be marked as being spoken by applying a phonological phenomena. The text sentence may be reconstructed by using exceptional pronunciation dictionaries regarding exceptional pronunciation that cannot be applied with a normal phonological phenomena.

The TTS module may compose the voice with pronunciation marking information in which the sentence is converted and marked regarding a pronunciation at language processing, speaking speed control parameters, and sentiment audio parameters. A frequency may be composed by considering dynamics, accents, intonations, and duration time (end time per phoneme (a number of samples) - start time per phoneme (a number of samples)) respectively regarding preset phonemes, boundaries, delay time between sentence units, and a preset speaking speed.

Accent indicates a strength and a weakness within a syllable distinguished in a pronunciation. Duration time indicates a time when pronouncing a phoneme is kept, which may be divided into a transition region and a state segment. Components influencing a determination of the duration time may be original values or average values regarding consonants and vowels, syllable types, an articulating method, positions of phonemes, a number of syllables within a syntactic part, positions of syllables within a syntactic part, neighbored phonemes, a sentence end, an intonation phrase, final lengthening occurring on boundaries, and effects according to speech parts corresponding to postpositions or ending words. Implementing the duration time may secure a minimum duration time for each phoneme. Further, implementing the duration time may adjust non-linearly the duration time regarding the vowels mainly rather than the consonants, the duration time regarding the ending consonants, the transition region, and the state segment.

Boundary may be used for facilitating the reading by the punctuating, the adjusting the breath, and the understanding of the speech. Boundary indicates the prosodic phenomenon occurring on the boundaries, which may be distinguished with the rapid falling of the pitch, the final lengthening before the syllables at the boundaries, and resting sections on the boundaries. The length of the boundary may change according to the speaking speed. Extracting the boundary from a sentence may be performed by analyzing morphemes with dictionaries on words and morphemes (postpositions, ending words).

Further, the audio parameters influencing the sentiment may be considered. Average pitch, pitch curved lines, speaking speeds, and speaking types may be considered, for example, as discussed in the reference article J. Cahn, Generating Expression in Synthesized Speech, M.S. thesis, MIT Media Lab, Cambridge, MA, 1990.

The above-mentioned operation of the TTS module may need a large amount of computations, and thus, may be performed in another TTS server. In this example, because converted voice data should be received from the other TTS server, delay may occur in processing speed according to the receiving.

The voice recognizer 120 is configured to collect voices of conference participants. The collecting of the voices may be performed with related microphones. For example, the collecting of the voices may be performed with at least one among a dynamic mic, a condenser mic, a piezoelectric mic using a piezoelectric phenomenon, a carbon mic using a contact resistance of carbons, a pressure mic (an omni-directional type) generating an output proportional to a sound pressure, and a bi-directional mic generating an output proportional to a velocity of negative particles. The above microphones may be included in the conference proceeding apparatus 100-2.

A time of collecting the voices may be adjusted by manipulating a collecting device whenever it is requested from conference participants. However, the conference proceeding apparatus 100-2 may perform the collecting of the voices repeatedly for a preset time. The collecting time may be determined based on a time taken for analyzing a voice and transmitting data, and a correct analysis on meaningful sentence structures. The collecting of the voices may be finished when a pausing period in which conference participants stop communication, i.e., a preset time period, elapses without collecting voices. The collecting of the voices may be performed continuously and repeatedly. The voice recognizer 120 provides an audio stream including information of the collected voices to the voice-text converter 140.

The voice-text converter 140 receives the audio stream, extracts voice information, and converts the voice information into texts according to a recognition method. For example, the voice-text converter 140 may generate text information corresponding to a user voice by using a Speech-to-Text engine. The STT engine may be a module configured to convert voice signals into texts, based on various STT algorithms that are disclosed in the art.

For example, voice sections may be determined by extracting a start and an end of voices spoken by conference participants within the received voices of the conference participants. The voice sections may be extracted through a dynamic programming by calculating an energy regarding the received voice signals and classifying an energy level of the voice signals according to the calculated energy. Further, phoneme data may be generated by extracting phonemes that are a minimum unit of the voice based on an acoustic model within the extracted voice sections. The voices of conference participants may be converted into the texts by applying a Hidden Markov Model (HMM) probability model to the generated phoneme data.

Further, the voice-text converter 140 extracts features of the voices of the conference participants from the collected voices. For example, the features of the voices may include pieces of information such as tones, accents, and heights distinguished between the conference participants, which indicate features in which a listener can recognize a participant speaking a voice. The features of the voices may be extracted from a frequency of the collected voices. Parameters indicating the features of the voices may be, for example, energy, a zero crossing rate (ZCR), a pitch, and a formant. Regarding methods extracting the features of the voices to recognize voices, the linear prediction (LPC) method modeling a vocal organ, of a human and the filter bank modeling an auditory organ of a human, are widely used. Because the LPC method may use an analysis in a time domain, a calculating amount may be relatively small, and the recognition can be performed excellently in a quiet environment. However, the recognition may be visibly less performed in a noisy environment.

Regarding recognizing voices in a noisy environment, modeling an auditory organ of a human with a filter bank may be mainly used. Further, a Mel Frequency Cepstral Coefficient (MFCC) based on a Mel-scale filter bank may be used in many cases for extracting features of a voice. According to psychoacoustic researches, it is well-known in the art that relations between a physical frequency and pitches regarding a subjective frequency recognized by a human are not linear. Thus, Mel defining a frequency scale recognized by the human may be used, which is distinguished from the physical frequency (f) measured with Hz. When the features of the voices spoken by the conference participants are extracted, a speaker may be recognized by distinguishing the features.

Because the voice-text converter 140 may need a large amount of calculations, the converting of the voice signals into the texts and the extracting of the features of the voices that are described above may be performed in another STT server. However, in this example, a velocity deterioration may occur according to a transmission because voice data is to be transmitted to the other STT server.

The controller 130 may register the converted texts correspondingly to the conference proceeding steps, and create a conference record. Thus, when the conference participants speak voices, the controller 130 may recognize the spoken voices, convert the recognized voices into the texts, and register the converted texts in the conference record. The controller 130 may control the display 150 to display the conference record including the converted texts so that the conference participants can confirm a conference proceeding situation at real time. Further, the controller 130 may recognize a speaker according to the above method, and display comments of the speaker with the speaker.

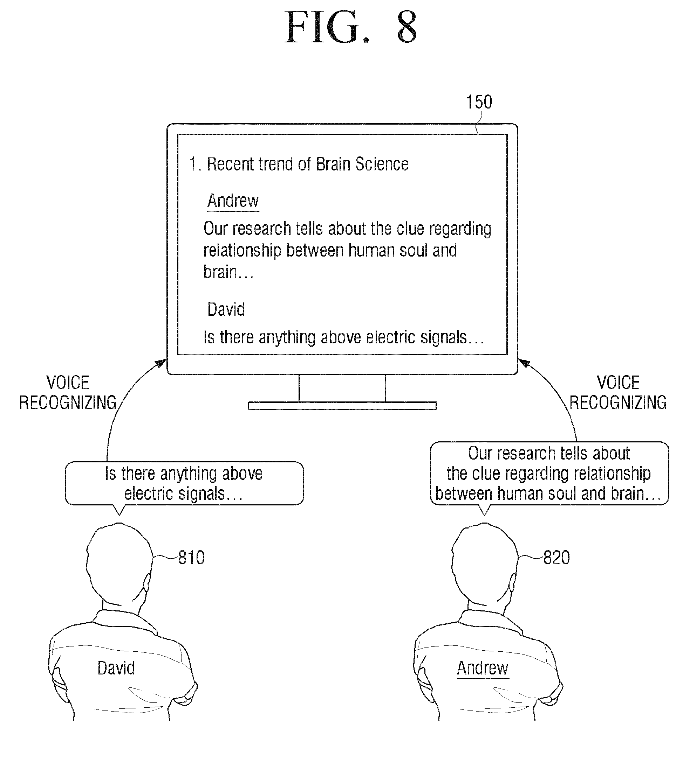

FIG. 8 is a diagram illustrating a display method regarding conference proceeding steps according to an exemplary embodiment.

Referring to FIG. 8, voices spoken by conference participants 810 and 820 are recognized and converted into texts, and the converted texts are displayed on the screen of the display 150 with information of the speakers. Further, speaking descriptions of the conference participants may be registered in a conference record correspondingly to conference proceeding steps, and displayed on the screen.

Differently from the above, referring again to FIG. 6, the controller 130 may register the converted texts based on main keywords, or summarize and register the converted texts. In this example, displaying may be performed on the screen based on the registered texts.

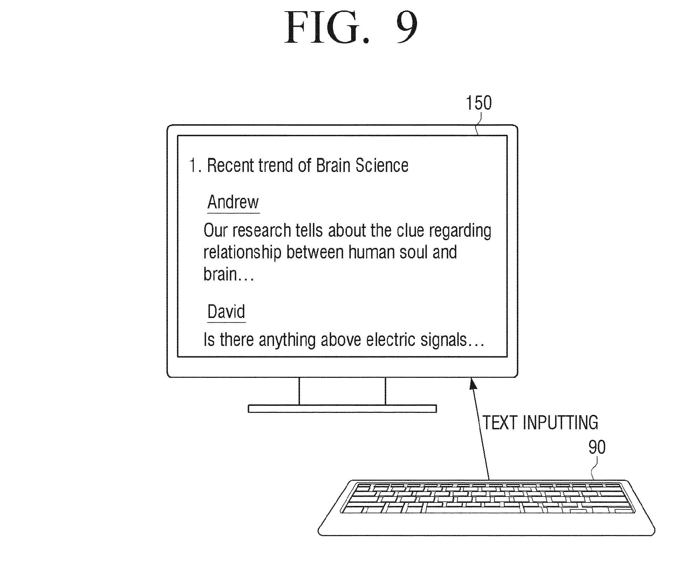

FIG. 9 is a diagram illustrating a display method regarding conference proceeding steps according to an exemplary embodiment.

When a conference proceeds, a conference stenographer may need to add comments to conference descriptions, write memos regarding a conference situation, and summarize the conference descriptions. Referring to FIGS. 6 and 9, when input texts are received through the inputter 110, the controller 130 may register the received texts in a conference record correspondingly to conference proceeding steps. Thus, as illustrated in FIG. 9, a conference stenographer or a conference participant inputs, via an input device 90, the comments related with a conference proceeding as texts, and registers and displays the texts in the conference record.

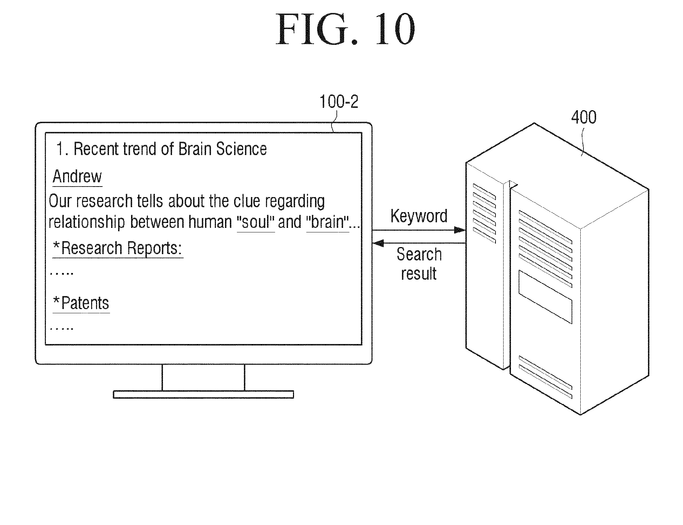

FIG. 10 is a diagram illustrating a display method regarding conference proceeding steps according to an exemplary embodiment.

Referring again to FIG. 6, the conference proceeding apparatus 100-2 may additionally include a keyword searcher configured to extract keywords from the converted texts, and search with the extracted keywords, e.g., for items related to a conference. The controller 130 may register results of the searching in the conference record correspondingly to the conference proceeding steps, and control the display 150 to display the registered results on the screen.

Referring to FIGS. 6 and 10, the keyword searcher of the conference proceeding apparatus 100-2 extracts keywords (e.g., "soul" and "brain") from the converted texts, and requests a searching server 400 to search the server 400 (e.g., a database) with the extracted keywords as queries. The searching server 400 may search based on the received queries, and provide a search result to the conference proceeding apparatus 100-2.

The above constitution may provide actual information corresponding to ideas discussed in a conference to conference participants, as well as focus on an efficient completion of the conference. The above constitution may encourage brain storming jobs. FIG. 10 illustrates that related patent documents and articles (research reports) are searched and displayed by recognizing and converting voices of the conference participants into the texts, and searching based on keywords included in the converted texts. The keyword searcher and the searching server 400 may perform the searching based on at least one among big data processing technology, triz technology, and mind map technology.

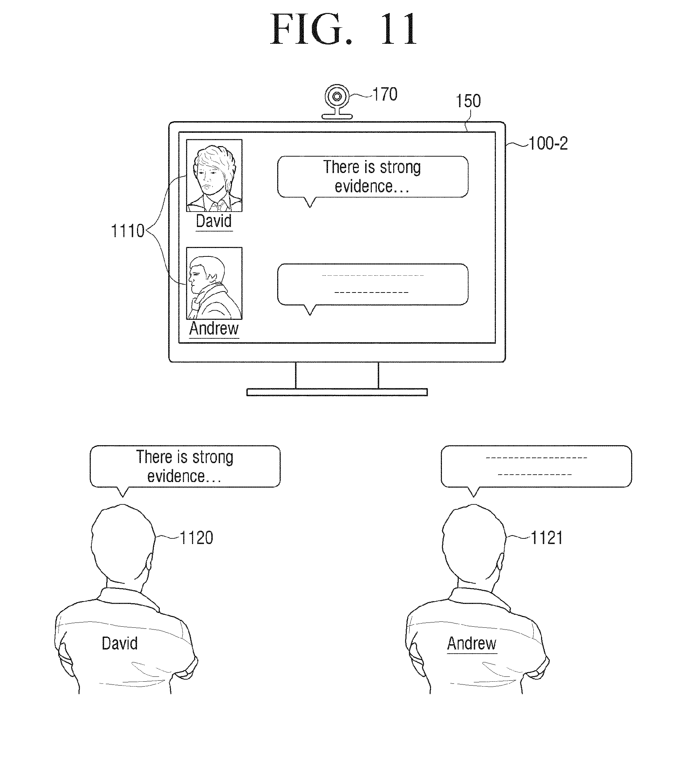

FIG. 11 is a diagram illustrating a display method including conference proceeding steps according to an exemplary embodiment.

Referring to FIGS. 6 and 11, the conference proceeding apparatus 100-2 may additionally include a face recognizer configured to recognize faces of conference participants. In this example, the face recognizer includes a photographer 170, i.e., a camera. The face recognizer may distinguish the conference participants by photographing the conference participants, recognizing the faces of the conference participants, and comparing the recognized faces with user information stored in the storage 160 or the server. The controller 130 may confirm whether the conference participants attend a conference based on face recognizing information (i.e., results of the comparison of the recognized faces with the user information), and distinguish a speaker when one conference participant speaks based on the face recognizing information. Further, the controller 130 may display the information of the distinguished speaker on the screen. Thus, the controller 130 may create the conference record based on the face recognizing information of the recognized conference participants.

FIG. 11 illustrates that the photographer 170 displays distinguishing information 1110 by photographing conference participants 1120 and 1121 in front of the display 150, and distinguishing faces of the conference participants 1120 and 1121. The photographer 170 recognizes voices of speech of the conference participants 1120 and 1121, converts the voices into the texts, and displays the texts on the screen with the distinguishing information 1110. The controller 130 may register the converted texts by matching the recognized faces of the conference participants 1120 and 1121 with the recognized voices of the conference participants 1120 and 1121.

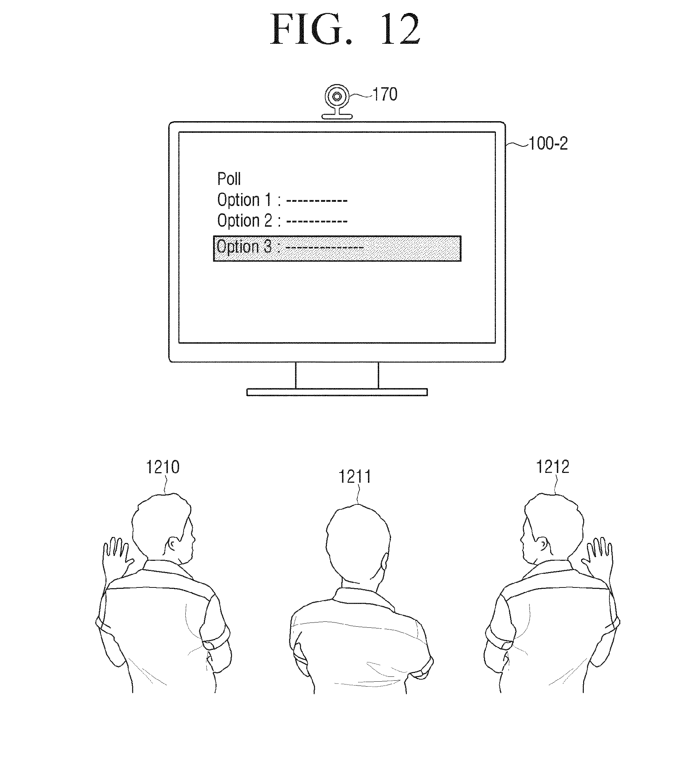

FIG. 12 is a diagram illustrating a display method including conference proceeding steps according to an exemplary embodiment.

Referring to FIGS. 6 and 12, the conference proceeding apparatus 100-2 may additionally include a gesture recognizer configured to recognize gestures of conference participants. In this example, the gesture recognizer includes the photographer 170. The gesture recognizer may photograph the gestures of the conference participants to distinguish the gestures, and determine opinions of the conference participants by comparing the distinguished gestures with gesture command information stored in the storage 160 or the server. The determined opinions of the conference participants may be reflected in the conference record, and the display 150 may display the determined opinions on the screen.

The opinions of the conference participants may be determined based on the voices of the conference participants collected by the voice recognizer 120. In detail, the controller 130 may analyze the collected voices of the conference participants, and determine whether the conference participants express an agreement or positive opinions regarding a conference subject.

FIG. 12 illustrates an example in which a brief voting proceeds in a conference. The conference participants 1210, 1211, and 1212 make gestures to raise their hands, which have been agreed as expressing agreement to or voting for an option. Pros and cons voting of the conference participants 1210, 1211, and 1212 is determined per option regarding conference discussion subjects based on the gesture input. FIG. 12 illustrates an example in which the two conference participants 1210 and 1212 agree with or vote for an option 3, while the other conference participant 1211 disagrees with or does not vote for the option 3. The controller 130 may control the display 150 to display, on the screen, results of the voting based on the determined opinions of the conference participants. Thus, the controller 130 may control the display 150 to display results of voting of the conference participants on the discussion subjects.

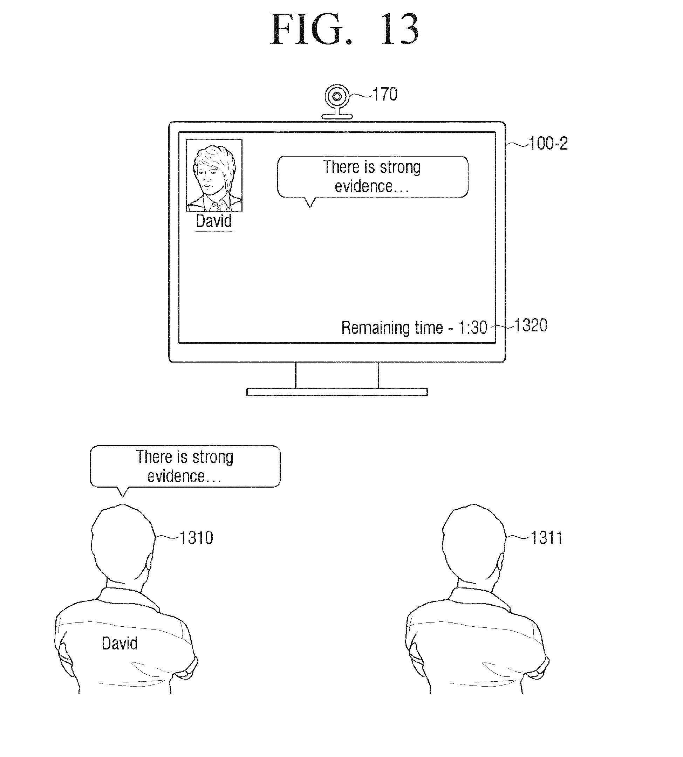

FIG. 13 is a diagram illustrating a display method including conference proceeding steps according to an exemplary embodiment.

Referring to FIGS. 6 and 13, the controller 130 may track a time duration of each of the conference proceeding steps, and control the display 150 to display the tracked time duration. Because a reservation time of a conference room is usually limited, a conference manager may need to tightly manage the time tight of each conference proceeding step to not cause delay in a conference. Further, the controller 130 may track a speech time duration to limit a speech time duration of each conference participant, and control the display 150 to display the tracked speech time duration.

FIG. 13 illustrates an example in which a conference participant 1310 makes a speech to a conference participant 1311, and a remaining time duration 1320 until the conference participant 1310 is to close the speech (the time duration left until the speaking of the conference participant 1310 is to end) is displayed on the display 150.

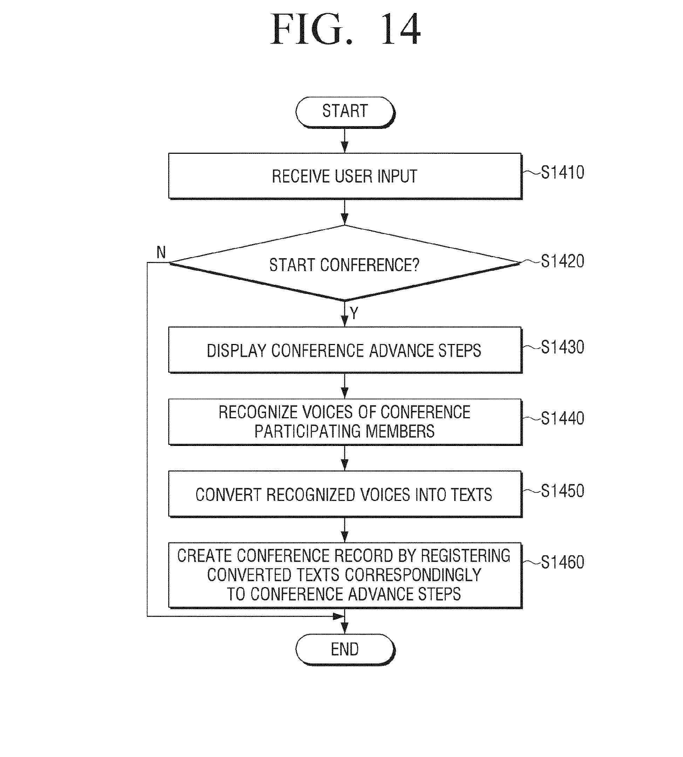

FIG. 14 is a flowchart illustrating a conference proceeding method according to an exemplary embodiment.

Referring to FIG. 14, in operation S1410, the conference proceeding method includes receiving a user input.

In operation S1420, the conference proceeding method includes determining whether a user input to start a conference is received. When the user input to start the conference is determined to be received, the conference proceeding method continues in operation S1430. Otherwise, the conference proceeding method ends.

In operation S1430, the conference proceeding method includes displaying conference proceeding steps or conference advance steps on a screen.

In operation S1440, the conference proceeding method includes recognizing voices of conference participants.

In operation S1450, the conference proceeding method includes converting the recognized voices of the conference participants into texts.

In operation S1460, the conference proceeding method includes creating a conference record by registering the converted texts correspondingly to the conference proceeding steps.

Further, the conference proceeding method may include outputting an audio indicating the conference proceeding steps when the user input to start the conference is determined to be received.

Further, the conference proceeding method may include registering input texts in the conference record correspondingly to the conference proceeding steps. The input texts may be received through an inputter.

Further, the conference proceeding method may include extracting keywords from the converted texts, and searching with the extracted keywords. The conference proceeding method may include registering results of the searching in the conference record correspondingly to the conference proceeding steps. The keyword searching may be performed based on at least one among big data processing technology, triz technology, and mind map technology.

Further, the conference proceeding method may include recognizing faces of the conference participants, and creating the conference record based on the recognized faces of the conference participants. The converted texts may be registered by matching the recognized faces of the conference participants with the recognized voices of the conference participants.

Further, the conference proceeding method may include recognizing gestures of the conference participants, and determining whether a conference subject is agreed on (i.e., voting on the conference subject) by analyzing the recognized gestures of the conference participants. The conference proceeding method may additionally include displaying results of the voting on the conference subject of the conference participants when the conference participants attend the conference.

Further, the conference proceeding method may include tracking a time duration of each of the conference proceeding steps, and displaying the tracked time duration.

Further, the conference proceeding method may include displaying information of conference rooms of a time slot having no conference room reservation when a user input to reserve a conference room is received. In this example, when the user input to reserve the conference room is received, the information of the conference rooms of the time slot having no conference reservation may be displayed based on at least one among office position information and schedule information of the conference participants.

As discussed, embodiments of the invention can provide a conference advance apparatus (or conferencing apparatus), comprising: an inputter configured to receive a user input; a display configured to display conference advance steps (conference proceeding steps) on a screen when a user input to start a conference is received; a voice recognizer configured to recognize voices of conference participants; a voice-text converter configured to convert the recognized voices of the conference participants into texts; and a controller configured to create a conference record by registering the converted texts correspondingly to the conference advance steps.

Embodiments of the invention can also provide a conference advance method, comprising: receiving a user input; displaying conference advance steps on a screen when a user input to start a conference is received; recognizing voices of conference participants; converting the recognized voices of the conference participants into texts; and creating a conference record by registering the converted texts correspondingly to the conference advance steps.

In addition, the exemplary embodiments may also be implemented through computer-readable code and/or instructions on a medium, e.g., a non-transitory computer-readable medium, to control at least one processing element to implement any above-described embodiments. The medium may correspond to any medium or media which may serve as a storage and/or perform transmission of the computer-readable code.

The computer-readable code may be recorded and/or transferred on a medium in a variety of ways, and examples of the medium include recording media, such as magnetic storage media (e.g., ROM, floppy disks, hard disks, etc.) and optical recording media (e.g., compact disc read only memories (CD-ROMs) or digital versatile discs (DVDs)), and transmission media such as Internet transmission media. Thus, the medium may have a structure suitable for storing or carrying a signal or information, such as a device carrying a bitstream according to one or more exemplary embodiments. The medium may also be on a distributed network, so that the computer-readable code is stored and/or transferred on the medium and executed in a distributed fashion. Furthermore, the processing element may include a processor or a computer processor, and the processing element may be distributed and/or included in a single device.

The foregoing exemplary embodiments and advantages are merely exemplary embodiments and are not to be construed as limiting the exemplary embodiments. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A conference advance apparatus, comprising:
an inputter configured to receive a user input;
a display configured to display conference advance steps on a screen when a user input to start a conference is received;
a voice recognizer configured to recognize voices of conference participants;
a voice-text converter configured to convert the recognized voices of the conference participants into texts; and
a controller configured to create a conference record by registering the converted texts correspondingly to the conference advance steps.

2. The conference advance apparatus of claim 1, further comprising:
an audio outputter,
wherein the controller controls the audio outputter to output an audio indicating the conference advance steps when the user input to start the conference is received.

3. The conference advance apparatus of claim 1 or 2, wherein the controller registers inputting texts on the conference record correspondingly to the conference advance steps when the inputting texts are received through the inputter.

4. The conference advance apparatus of any of claims 1 to 3, further comprising:
a keyword searcher configured to extract keywords from the converted texts and search with the extracted keywords.

5. The conference advance apparatus of claim 4, wherein the controller registers searching results on the conference record correspondingly to the conference advance steps.

6. The conference advance apparatus of claim 4 or 5, wherein the keyword searcher performs the searching by using at least one among big data processing technology, triz technology, and mind map technology.

7. The conference advance apparatus of any of claims 1 to 6, further comprising:
a face recognizer configured to recognize faces of the conference participants,
wherein the controller creates the conference record based on information regarding the recognized faces of the conference participants.

8. The conference advance apparatus of claim 7, wherein the controller registers the converted texts by matching the recognized faces of the conference participants with the recognized voices of the conference participants.

9. The conference advance apparatus of any of claims 1 to 8, further comprising:
a gesture recognizer configured to recognize gestures of the conference participants,
wherein the controller determines whether a conference subject is agreed on by analyzing the recognized gestures of the conference participants.

10. The conference advance apparatus of claim 9, wherein, when a plurality of conference participants attend, the controller controls the display to display voting results on the conference subject regarding the plurality of conference participants.

11. The conference advance apparatus of any of claims 1 to 10, wherein the controller controls the display to count a time regarding the conference advance steps, and display the counted time.

12. The conference advance apparatus of any of claims 1 to 11, wherein, when a user input to reserve a conference is received, the controller controls the display to display information regarding conference rooms of a time slot having no conference reservation.

13. The conference advance apparatus of any of claims 1 to 12, wherein, when a user input to reserve a conference is received, the controller controls the display to display information regarding conference rooms of a time slot having no conference reservation based on at least one among office position information and schedule information regarding the conference participants.

14. The conference advance apparatus of claim 12 or 13, further comprising:
a communicator configured to communicate with a terminal apparatus,
wherein the controller controls the communicator to transmit at least one among a conference purpose, a conference time, and a conference position information to terminal apparatuses of the conference participants when a conference reservation completes.

15. A conference advance method, comprising:
receiving a user input;
displaying conference advance steps on a screen when a user input to start a conference is received;
recognizing voices of conference participants;
converting the recognized voices of the conference participants into texts; and
creating a conference record by registering the converted texts correspondingly to the conference advance steps.
